# EUROPÄISCHE PATENTSCHRIFT

(11) **EP 1 697 179 B1**
(45) Veröffentlichungstag und Bekanntmachung des Hinweises auf die Patenterteilung: **04.11.2009**
(21) Anmeldenummer: 04797706.1
(22) Anmeldetag: 08.11.2004
(51) Int. Cl.: B60R 21/04

(54) **VORRICHTUNG ZUM INSASSENSCHUTZ FÜR EIN KRAFTFAHRZEUG**
OCCUPANT PROTECTION DEVICE FOR A MOTOR VEHICLE
DISPOSITIF DE PROTECTION DES PASSAGERS D'UNE AUTOMOBILE

(30) Priorität: 22.12.2003 DE 10360342
(43) Veröffentlichungstag der Anmeldung: 06.09.2006
(73) Patentinhaber: LEONI Bordnetz-Systeme GmbH, 90402 Nürnberg (DE)
(72) Erfinder: FRIEDRICH, Norbert, 96181 Rauhenebrach (DE)
(74) Vertreter: Dörr, Matthias
(86) Internationale Anmeldenummer: PCT/EP2004/012613
(87) Internationale Veröffentlichungsnummer: WO 2005/063529

(56) Entgegenhaltungen:
- GB-A- 2 308 340
- US-A1- 2001 042 988
- US-B1- 6 293 614
- US-B2- 6 435 601

## Beschreibung

Die Erfindung betrifft eine Vorrichtung zum Insassenschutz für ein Kraftfahrzeug, insbesondere eine Vorrichtung zur Reduzierung des Kopfverletzungsrisikos bei einem Unfall.

Zur Reduzierung des Kopfverletzungsrisikos sind unter anderem Kopf- und Seiten-Airbags bekannt, die im Falle eines Unfalls den Aufprall des Kopfes abfangen. Die Airbags decken hierbei jedoch immer nur begrenzte Breiche ab. Ein Problembereich bleibt weiterhin die so genannte A-Säule, also die vorderste Karosseriesäule zwischen Windschutzscheibe und den Vordertüren. Um hier das Verletzungsrisiko gering zu halten, können Energie absorbierende Verkleidungselemente vorgesehen sein. Diese weisen beispielsweise an ihrer vom Fahrgastinnenraum abgewandten Rückseite Rippen auf. Hier besteht jedoch die Gefahr, dass die Verkleidungselemente bei einem Unfall aus ihrer Befestigung gerissen werden und in den Fahrgastinnenraum gelangen. Hierbei können insbesondere auch die Rippen brechen, so dass mitunter scharfkantige Teile zu Verletzungen führen können. Alternativ zu diesen als Energieabsorptionselemente ausgebildeten Verkleidungselementen können auch Energie absorbierende Einlegeteile vorgesehen sein, die beispielsweise zwischen der A-Säule und der Innenverkleidung eingelegt werden. Dies erfordert einen vergleichsweise hohen Montageaufwand. Zusätzlich sind oftmals im Bereich der A-Säule Kabel eines Bordnetzes angeordnet, die in einem getrennten Montageschritt verlegt werden und somit den Montageaufwand erhöhen.

Aus der US 6,435,601 B2 ist ein aus mehreren Segmenten zusammensetzbares rohrförmiges und damit hohles Energeiabsorptionselement zu entnehmen. Auch aus der US 6,293,614 B1 ist ein einen Hohlraum bildendes Energieabsorptionselement zu entnehmen. Beispiele für weitere Energieäbsorptionselemente finden sich darüber hinaus auch in der US 2001/042988 A1.

Der Erfindung liegt die Aufgabe zugrunde, eine einfach zu montierende Vorrichtung zum Insassenschutz anzugeben, bei der insbesondere das Kopfverletzungsrisiko gering ist.

Die Aufgabe wird gemäß der Erfindung durch eine Vorrichtung mit den Merkmalen des Patentanspruchs 1 gelöst. Hierbei ist vorgesehen, dass in den Zwischenraum zwischen einer Karosseriesäule, insbesondere der A-Säule, und einer Säulenverkleidung ein Kabelsatzelement mit Kabeln angeordnet ist, wobei das Kabelsatzelement zugleich als Energieabsorptionselement für den Insassenschutz ausgebildet ist.

Gemäß Anspruch 1 ist daher vorgesehen, das im Bereich der A-Säule verlegte Kabelsatzelement und das Energieabsorptionselement als eine integrale, einstückige Baueinheit auszubilden. Durch diese Maßnahme ist der Montageaufwand gering gehalten, da lediglich ein Element montiert werden muss. Mit der Montage des Kabelsatzelements wird zugleich auch das Energieabsorptionselement montiert. Das Kabelsatzelement hat insofern eine Doppelfunktion, nämlich einerseits hat es als Teil des Bordnetzes eine elektrische Funktion und andererseits besitzt es aufgrund seiner Ausbildung zur Energieabsorption zugleich eine Schutzfunktion, um im Falle eines Unfalls das Verletzungsrisiko gering zu halten.

Um einen eventuellen Aufprall des Kopfes möglichst gut dämpfen zu können, weist in einer bevorzugten Weiterbildung das Kabelsatzelement einen geschäumten Formkörper auf, in dem die Kabel geführt sind. Das Kabelsatzelement ist daher von einem vergleichsweise weichen und elastischen Material gebildet. Die Kabel sind hierbei insbesondere vollständig umschäumt. Alternativ hierzu wird das Kabel erst nach der Fertigung des Formkörpers mit diesem verbunden. Hierzu weist der Formkörper bevorzugt eine insbesondere rinnenartige Ausnehmung auf, in die das Kabel z.B. durch Eindrücken oder Einklippsen unverlierbar gehalten ist. Als Schäummaterial können übliche Kunststoff-Materialien verwendet werden, wie sie z. B. Auch für umschäumte Kabelsätze verwendet werden. Die Energie absorbierende Eigenschaften, also beispielsweise die Härte und Elastizität des Formkörpers, können über weite Bereiche entsprechend den gewünschten Anforderungen eingestellt werden. Aufgrund der Verwendung eines geschäumten Formkörpers können bei einem Unfall keine scharfkantigen Teile absplittern und in den Innenraum gelangen, die das Verletzungsrisiko erhöhen würden.

Zweckdienlicherweise ist das Kabelsatzelement, insbesondere der Formkörper, an die Geometrie der Säulenverkleidung angepasst. Der Formkörper liegt also an der Säulenverkleidung im Wesentlichen an, so dass über den gesamten Bereich der Säuleninnenverkleidung die Schutzfunktion gewährleistet ist.

Weiterhin ist vorzugsweise vorgesehen, dass das Kabelsatzelement den Zwischenraum zumindest weitgehend ausfüllt. Das Kabelsatzelement, insbesondere der Formkörper, ist daher im Wesentlichen an die Querschnittsgeometrie des Zwischenraums angepasst. Durch diese Anpassung ist zum einen eine Lagefixierung des Kabelsatzelements erreicht. Zum anderen ist durch die vollständige Ausfüllung des Zwischenraums mit dem geschäumten Formkörper eine sehr hohe Energieabsorptionsfähigkeit gegeben.

Gemäß einer zweckdienlichen Weiterbildung ist das Kabelsatzelement in eine Energieabsorptionszone und eine Kabelführungszone unterteilt. In der Kabelführungszone sind hierbei die Kabel angeordnet, wohingegen die Energieabsorptionszone insbesondere frei von Kabeln ist. Diese Ausgestaltung beruht auf der Überlegung, dass in dem Bereich, in dem Kabel im Formkörper angeordnet sind, dieser üblicherweise eine erhöhte Steifigkeit und Härte aufweist, so dass in diesem Bereich eine geringere Energieabsorptionsfähigkeit vorliegt. Die Energieabsorptionszone ist daher in den Bereichen mit dem größeren Gefahrenpotenzial vorgesehen. Bevorzugt ist hierbei die Kabelführungszone an einem Randbereich des Kabelsatzelementes ausgebildet. Insgesamt ist damit eine unsymmetrische Verteilung und keine Gleichverteilung der Kabel im den Formkörper ausgebildet.

Im Hinblick auf eine möglichst einfache Montage weist das Kabelsatzelement ein angeformtes Befestigungselement auf, mit dem es mit der Karosseriesäule verbunden ist. Das Befestigungselement ist beispielsweise ein Schnapphaken oder ein Einrastelemeint, welches ein integraler Bestandteil des geschäumten Formkörpers ist.

Gemäß einer bevorzugten Weiterbildung bilden die Säulenverkleidung und das Kabelsatzelement eine gemeinsame Baueinheit. Die Säulenverkleidung ist hierzu insbesondere unmittelbar auf das Kabelsatzelement aufgebracht. Beispielsweise ist vorgesehen, dass die Säulenverkleidung als zunächst separates Element auf das Kabelsatzelement geklebt wird. Alternativ kann die Säulenverkleidung auch durch unmittelbare Ausgestaltung einer Oberflächenstruktur auf der Oberfläche des Kabelsatzelementes beispielsweise durch Aufspritzen ausgebildet werden. Anstelle des Aufspritzens ist gemäß einer dritten Alternative vorgesehen, dass bereits der Formkörper des Kabelsatzelements eine als Säulenverkleidung geeignete Oberflächenstruktur aufweist. Dies wird bevorzugt durch die Verwendung von zwei unterschiedlichen Materialien, insbesondere Schäumen, für den Formkörper oder durch eine geeignete Oberflächenausgestaltung des formgebenden Werkzeugs für den Formkörper erreicht. Durch Ausgestaltung als gemeinsame Baueinheit ergibt sich eine weitere Montagevereinfachung, so dass vorzugsweise die gesamte Installation im Bereich der A-Säule, nämlich die Anordnung von Kabeln, die Anordnung von Energieabsorptionselementen und die Anordnung der Säuleninnenverkleidung durch die Montage einer einzigen integralen Baueinheit in einem einzigen Arbeitsgang erfolgen kann.

Gemäß einer zweckdienlichen Weiterbildung ist weiterhin vorgesehen, dass das Kabelsatzelement mit dem als Energieabsorptionselement ausgebildeten Formkörper von der A-Säule in Richtung zu einer weiteren Karosseriesäule, beispielsweise der B- oder C-Säule, weiter geführt ist. Durch diese Maßnahme wird das Schutzelement nicht nur im Bereich der A-Säule sondern auch an der Seite im Bereich eines die Karosseriesäule verbindenden Dachholms weitergeführt. Diese Ausgestaltung ist insbesondere für derartige Kraftfahrzeuge von Vorteil, bei denen kein Seitenairbag vorhanden ist. Zweckdienlicherweise ist hierbei vorgesehen, dass der Formkörper auch zumindest teilweise in einen weiteren Zwischenraum zwischen einem Karosseriedach und einem Dachhimmeln hinein reicht, um im seitlichen Gefahrenbereich eine ausreichende Schutzfunktion zu gewährleisten.

Bevorzugt weist der Formkörper hierbei mehrere Teilstücke auf. Hierdurch ist die Herstellung vereinfacht. Durch die lose über die Kabel miteinander verbundenen Teilstücke weist das Kabelsatzelement insgesamt auch eine hohe Flexibilität auf, so dass ein einfaches Verlegen ermöglicht ist. Bei der Montage werden hierbei die Kabel oder ein Kabelbündel vorzugsweise in die einzelnen Teilstücke eingelegt. Diese weisen hierzu beispielsweise Ausnehmungen auf oder sind in Längsrichtung geschlitz mit einem innenliegenden Aufnahmekanal ausgebildet, in den die Kabel nach Aufbiegen des Schlitzes eingelegt werden.

Die Aufgabe wird gemäß der Erfindung weiterhin gelöst durch ein Kabelsatzelement für eine solche Vorrichtung zum Insassenschutz, mit einem Formkörper, in dem Kabel geführt sind, und der zugleich als Energieabsorptionselement für den Insassenschutz ausgebildet ist. Ein derartig vorgefertigtes Kabelsatzelement lässt sich in der Fertigung beim Kraftfahrzeughersteller einfach montieren, wobei durch die Montage eines einzigen Bauelements zugleich mehrere Funktionen implementiert werden.

Ausführungsbeispiele der Erfindung werden im Folgenden anhand der Figur näher erläutert. Es zeigen jeweils in schematischen, stark vereinfachten Darstellungen:
- Fig. 1A: einen Querschnitt durch den Bereich einer A-Säule in einem Kraftfahrzeug,
- Fig. 1B: ein Kabelsatzelement, das zugleich eine Säulenverkleidung bildet,
- Fig. 2: eine ausschnittsweise perspektivische Darstellung eines Kraftfahrzeugs im Bereich zwischen der A- und der B-Säule, und
- Fig. 3: eine Querschnittsansicht im Bereich des Karosserieholms zwischen der A-Säule und der B-Säule.

In den Figuren sind gleich wirkende Teile mit den gleichen Bezugszeichen versehen.

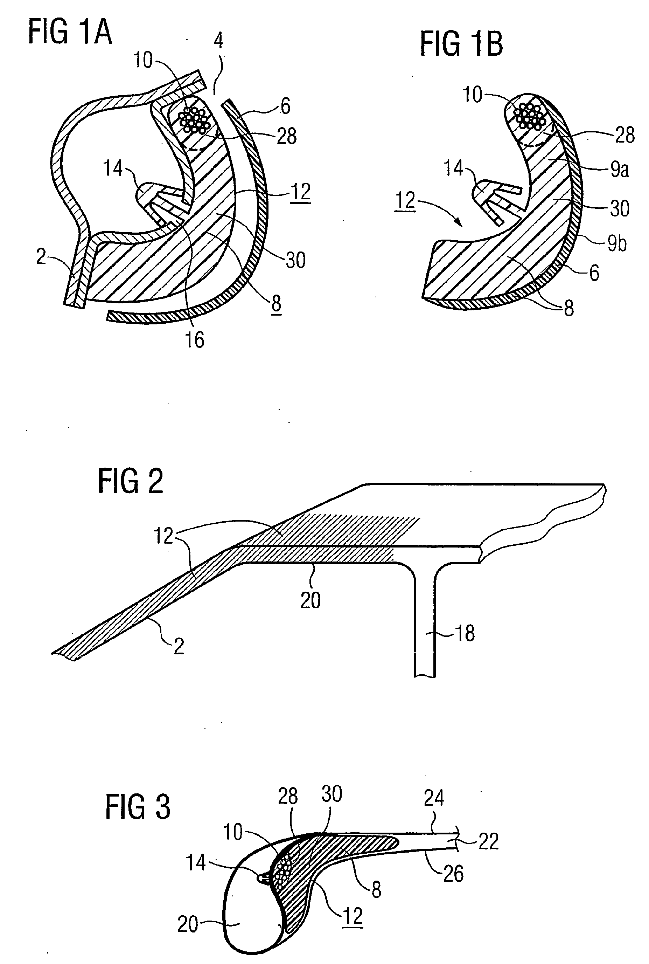

Gemäß Fig. 1A ist eine so genannte A-Säule 2 zum Fahrgastinnenraum eines hier nicht näher dargestellten Kraftfahrzeugs unter Ausbildung eines Zwischenraums 4 von einer Säulenverkleidung 6 abgedeckt. Zwischen der Säulenverkleidung 6 und der A-Säule 2 ist ein geschäumter Formkörper 8 angeordnet, in dem mehrere Kabel 10 verlaufen. Der Formkörper 8 mit den darin angeordneten Kabeln 10 bildet daher ein Kabelsatzelement 12 ais Teil eines Kraftfahrzeug-Bordnetzes aus. Aufgrund des geschäumten Formkörpers weist das Kabelsatzelement 12 eine hohe Energieabsorptionsfähigkeit aus und bildet daher zugleich auch ein Energie-Absorptionselement. Der Formkörper 8 mit den darin umschäumten Kabeln 10 bildet daher eine Kombinations-Baueinheit oder ein kombiniertes Funktionselement, welches die Funktionen der Bereitstellung von elektrischen Leitungen einerseits und der Energieabsorption andererseits in sich vereint. Durch die kombinierte Funktionseinheit ist eine einfache und zügige Montage bei gleichzeitiger Bereitstellung der mehrfachen Funktionalität erreicht. Da der Formkörper 8 aus einem geschäumten Material besteht, bietet das Kabelsatzelement im Falle eines Unfalls eine hohe Sicherheit, da der Formkörper 8 aufgrund seiner hohen Elastizität kaum brechen kann. Insbesondere können keine scharfkantigen Elemente in den Fahrgastinnenraum eindringen.

Bevorzugt weist das Kabelsatzelement 12 neben den Kabeln 10 auch weitere elektrische Funktionselemente wie z.B. elektronische Bauteile auf, die insbesondere im Formkörper 8 eingebettet und dadurch besonders geschützt sind.

Das Kabelsatzelement 12 weist weiterhin ein als Einschnapphaken ausgebildetes Befestigungselement 14 auf, welches ein Teilstück des Formkörpers 8 ist. Das Befestigungselement 14 wird zur Befestigung des Kabelsatzelements 12 durch eine Befestigungsöffnung 16 in der A-Säule 2 hindurchgeschoben. Aufgrund seiner elastischen Ausbildung werden hierbei die in der Figur dargestellten Seitenarme zusammengedrückt, die sich anschließend im Inneren der A-Säule 2 wieder aufspreizen. Zur Befestigung des Kabelsatzelements können natürlich auch alternative Befestigungsarten vorgesehen sein.

Um die Schutzfunktion über einen möglichst großen Bereich zu gewährleisten, ist das Kabelsatzelement 12 an die Kontur der Säulenverkleidung 6 angepasst, das heißt, die Säulenverkleidung 6 schmiegt sich im Wesentlichen vollständig an das Kabelsatzelement 12 unmittelbar an. In Fig. 1 ist zur besseren Übersicht die Säulenverkleidung 6 vom Formkörper 8 beabstandet dargestellt.

Alternativ zu der Ausgestaltung der Säulenverkleidung 6 als separat zu montierendes Element kann diese auch vor der Montage mit dem Formkörper 8 verbunden sein. Das Kabelsatzelement 12 und die Säulenverkleidung 6 bilden in diesem Fall eine gemeinsame Baueinheit aus. Im Ausführungsbeispiel der Fig. 1B ist in einer weitergehenden Vereinfachung die gemeinsame Baueinheit dadurch gebildet, dass die Säulenverkleidung 6 ein Teilstück des Formkörpers 8 selbst ist. Hierbei ist vorgesehen, dass der Formkörper aus zwei unterschiedlichen Schaummaterialien 9a, 9b gebildet ist. Das Schaummaterial 9b bildet die sichtbare Oberfläche und damit die Säulenverkleidung 6.

Gemäß den Fig. 2 und 3 ist vorgesehen, das Kabelsatzelement 12 von der A-Säule in Richtung zur B-Säule 18 weiterzuführen. Und zwar ist das Kabelsatzelement 12 entlang des die A-Säule 2 mit der B-Säule 18 verbindenden Karosserieholms 20 entlang geführt. Gleichzeitig reicht der Formkörper 8 auch in einen weiteren Zwischenraum 22 zwischen dem Außenblech eines Karosseriedachs 24 und der Innenverkleidung eines Dachhimmels 26 hinein.

Der Bereich, in dem das Kabelsatzelement 12 angeordnet ist, ist in Fig. 2 durch eine Schraffur angedeutet. Alternativ zu dem dargestellten Bereich kann das Kabelsatzelement 12 auch in der B-Säule oder im Karosserieholm 20 weitergeführt werden.

Der Formkörper 8 des Kabelsatzelements ist gemäß dem Ausführungsbeispiel nach Figur 2 als ein durchgehendes und einstückiges Element ausgebildet. Alternativ hierzu besteht der Formkörper 8 aus mehreren Teilstücken (nicht dargestellt). So sind beispielsweise für die A-Säule 2, die B-Säule 18, den Karosserieholm 20 und den Zwischenraum 22 jeweils ein Teilstück vorgesehen. Die einzelnen Teilstücke stoßen hierbei in einer Ausführungsvariante nicht aneinander, so dass die einzelnen Teilstücke über die Kabel 10 flexibel miteinander verbunden sind.

Ebenso wie im Bereich der A-Säule 2 gemäß Fig. 1A sind die Kabel 10 auch im Bereich des Karosserieholms 20 ungleichmäßig im Formkörper 8 verteilt. Durch diese ungleichmäßige Verteilung entstehen im Formkörper 8 zwei Funktionszonen, nämlich einerseits eine Kabelführungszone 28 und andererseits eine Energieabsorptionszone 30. Die Kabelführungszone 28 hat eine im Vergleich zur Energieabsorptionszone 30 geringere Energieabsorptionsfähigkeit. Die Kabelführungszone 28 ist hierbei in einem Randbereich des Formkörpers 8 angeordnet. Gemäß Fig. 3 befindet sich die Kabelführungszone 28 im vom Fahrgastinnenraum abgewandten rückwärtigen Bereich des Formkörpers 8, der am Karosserieholm 20 anliegt. Im Bereich der Kabelführungszone 28 weist das Kabelsatzelement 12 eine höhere Steifigkeit und auch eine in der Regel höhere Härte als im restlichen Bereich auf, so dass hier die Energieabsorptionsfähigkeit geringer ist als im restlichen Bereich, in dem das Kabelsatzelement 12 ausschließlich aus dem geschäumten Material des Formkörpers 8 besteht. Durch die Anordnung der Kabelführungszone 28 im Randbereich oder im rückwärtigen Bereich ist sichergestellt, dass die Aufprallzone des Kabelsatzelements 12 eine hohe Energieabsorptionsfähigkeit aufweisen. Unter Aufprallzone wir hierbei der Bereich verstanden, in dem im Falle eines Unfalls der Aufprall des Fahrzeug-Insassen zu erwarten ist.

Die Ausgestaltung des Kabelsatzelments 12 zugleich als Energieabsorptionselement wird vorzugsweise auch für andere Korosserieteile, wie z.B. Türen, eingesetzt.

Aufgrund des als Schaumkörper ausgebildeten Formkörpers 8 weist das Kabelsatzelement 12 zugleich auch eine Dämmfunktion auf. Zweckdienlicherweise wird das Kabelsatzelment 12 im Hinblick auf die geometrische Ausgestaltung seines Formkörpers 8 daher derart an die karosserieseitig vorgegebene Geometrie angepasst, dass zugleich eine wirksame Wärmedämmung oder auch Schalldämmung erzielt wird.

### Bezugszeichenliste

- 2: A-Säule
- 4: Zwischenraum
- 6: Säulenverkleidung
- 8: Formkörper
- 9a, b: Schaummaterial
- 10: Kabel
- 12: Kabelsatzelement
- 14: Befestigungselement
- 16: Befestigungsöffnung
- 18: B-Säule
- 20: Karosserieholm
- 22: weiterer Zwischenraum
- 24: Karosseriedach
- 26: Dachhimmel
- 28: Kabelführungszone
- 30: Energieabsorptionszone

## Patentansprüche

1. Vorrichtung zum Insassenschutz für ein Kraftfahrzeug, mit einem Karosserieteil, das zusammen mit einer Verkleidung einen Zwischenraum (4) begrenzt, wobei in dem Zwischenraum (4) ein Kabelsatzelement (12) angeordnet ist, das einen Formkörper (8) mit darin eingebetteten Kabeln (10) aufweist und, wobei das Kabelsatzelement (12) zugleich als Energieabsorptionselement für den Insassenschutz und als integrale, einstückige Baueinheit ausgebildet ist.

2. Vorrichtung nach Anspruch 1, bei dem das Karosserieteil eine Karosseriesäule (2,18), insbesondere A-Säule (2) ist, die zur zu einer Säulenverkleidung (6) den Zwischenraum (4) einschließt.

3. Vorrichtung nach Anspruch 1 oder 2, bei der als Formkörper (8) ein geschäumter Formkörper (8) vorgesehen ist.

4. Vorrichtung nach Anspruch 2 oder 3, bei der das Kabelsatzelement (12) an die Geometrie der Säulenverkleidung (6) angepasst ist.

5. Vorrichtung nach einem der vorhergehenden Ansprüche, bei der das Kabelsatzelement (12) den Zwischenraum (4) zumindest weitgehend ausfüllt.

6. Vorrichtung nach einem der vorhergehenden Ansprüche, bei der das Kabelsatzelement (12) in eine Energieabsorptionszone (30) und eine Kabelführungszone (28) unterteilt ist.

7. Vorrichtung nach Anspruch 6, bei dem die Kabelführungszone (28) an einem Randbereich des Kabelsatzelements (12) ausgebildet ist.

8. Vorrichtung nach einem der vorhergehenden Ansprüche, bei der das Kabelsatzelment (12) ein angeformtes Befestigungselement (14) aufweist, mit dem es mit dem Karosserieteil (2,18) verbunden ist.

9. Vorrichtung nach einem der vorhergehenden Ansprüche und Anspruch 2, bei der die Säulenverkleidung (6) und das Kabelsatzelement (12) eine gemeinsame Baueinheit bilden.

10. Vorrichtung nach einem der vorhergehenden Ansprüche und Anspruch 2, bei der das Kabelsatzelement (12) von der Karosseriesäule (2) in Richtung zu einer weiteren Karrosseriesäule (18) weitergeführt ist.

11. Vorrichtung nach Anspruch 10, bei der der Formkörper (8) zumindest teilweise in einen weiteren Zwischenraum (22) zwischen einem Karosseriedach (24) und einem Dachhimmel (26) geführt ist.

12. Vorrichtung nach einem der vorhergehenden, bei der der Formkörper (8) in mehrere einzelne Teilstücke untergliedert ist.

13. Kabelsatzelement (12) für eine Vorrichtung nach einem der vorhergehenden Ansprüche, mit einem Formkörper (8) und mit darin eingebetteten Kabel (10), wobei der Formkörper (8) zugleich als Energieabsorptionselement für den Insassenschutz ausgebildet ist.

## Claims

1. Vehicle occupant protection device, having a vehicle bodywork part which, together with a trim, delimits an intermediate space (4), a cable set element (12) which has a shaped body (8) with cables (10) embedded therein being arranged in the intermediate space (4) and the cable set element (12) being at the same time embodied as an energy absorption element for vehicle occupant protection and as an integral, single-piece component.

2. Device according to Claim 1, in which the vehicle bodywork part is a vehicle bodywork pillar (2, 18), in particular an A pillar (2), which encloses the intermediate space (4) between it and a pillar trim (6).

3. Device according to Claim 1 or 2, in which a foamed shaped body (8) is provided as shaped body (8).

4. Device according to Claim 2 or 3, in which the cable set element (12) is adapted to the geometry of the pillar trim (6).

5. Device according to one of the preceding claims, in which the cable set element (12) at least largely fills the intermediate space (4).

6. Device according to one of the preceding claims, in which the cable set element (12) is divided into an energy absorption zone (30) and a cable routing zone (28).

7. Device according to Claim 6, in which the cable routing zone (28) is formed on an edge region of the cable set element (12).

8. Device according to one of the preceding claims, in which the cable set element (12) has an integrally formed attachment element (14) with which it is connected to the vehicle body part (2, 18).

9. Device according to one of the preceding claims and Claim 2, in which the pillar trim (6) and the cable set element (12) form a common component.

10. Device according to one of the preceding claims and Claim 2, in which the cable set element (12) is made to extend from the vehicle body pillar (2) in the direction of a further vehicle body pillar (18).

11. Device according to Claim 10, in which the shaped body (8) is made to extend at least partially into a further intermediate space (22) between a vehicle body roof (24) and a roof lining (26).

12. Device according to one of the preceding claims, in which the shaped body (8) is divided into a plurality of individual parts.

13. Cable set element (12) for a device according to one of the preceding claims, having a shaped body (8) and having a cable (10) embedded therein, the shaped body (8) being simultaneously embodied as an energy absorption element for vehicle occupant protection.

## Revendications

1. Dispositif pour assurer la protection des occupants dans un véhicule automobile, comprenant une pièce de carrosserie, qui, en commun avec une garniture d'habillage, délimite un espace intermédiaire (4), dispositif dans lequel à l'intérieur de l'espace intermédiaire (4) est agencé un élément de faisceau de câbles (12), qui comprend un corps de forme moulé (8) à l'intérieur duquel sont noyés des câbles (10), et l'élément de faisceau de câbles (12) est simultanément réalisé sous forme d'élément d'absorption d'énergie pour assurer la protection des occupants et sous forme de module de construction intégral, d'un seul tenant.

2. Dispositif selon la revendication 1, dans lequel la pièce de carrosserie est un montant de carrosserie (2, 18), en particulier un montant A (2), qui, en direction d'une garniture d'habillage de montant (6), enferme l'espace intermédiaire (4).

3. Dispositif selon la revendication 1 ou la revendication 2, dans lequel il est prévu en guise de corps de forme moulé (8), un corps de forme moulé (8) en mousse.

4. Dispositif selon la revendication 2 ou la revendication 3, dans lequel l'élément de faisceau de câbles (12) est adapté à la géométrie de la garniture d'habillage de montant (6).

5. Dispositif selon l'une des revendications précédentes, dans lequel l'élément de faisceau de câbles (12) comble ou remplit au moins dans une large mesure l'espace intermédiaire (4).

6. Dispositif selon l'une des revendications précédentes, dans lequel l'élément de faisceau de câbles (12) est subdivisé en une zone d'absorption d'énergie (30) et en une zone de guidage de câbles (28).

7. Dispositif selon la revendication 6, dans lequel la zone de guidage de câbles (28) est réalisée dans une région de bordure de l'élément de faisceau de câbles (12) .

8. Dispositif selon l'une des revendications précédentes, dans lequel l'élément de faisceau de câbles (12) présente un élément de fixation (14) qui y est formé par moulage et à l'aide duquel l'élément de faisceau de câbles est relié à la pièce de carrosserie (2, 18).

9. Dispositif selon l'une des revendications précédentes et la revendication 2, dans lequel la garniture d'habillage de montant (6) et l'élément de faisceau de câbles (12) forment un module de construction commun.

10. Dispositif selon l'une des revendications précédentes et la revendication 2, dans lequel l'élément de faisceau de câbles (12) est prolongé à partir du montant de carrosserie (2), en direction d'un autre montant de carrosserie (18).

11. Dispositif selon la revendication 10, dans lequel le corps de forme moulé (8) est mené au moins partiellement dans un autre espace intermédiaire (22) entre un toit de carrosserie (24) et une garniture d'habillage de plafond ou de toit (26).

12. Dispositif selon l'une des revendications précédentes, dans lequel le corps de forme moulé (8) est subdivisé en plusieurs pièces partielles individuelles.

13. Elément de faisceau de câbles (12) pour un dispositif selon l'une des revendications précédentes, comprenant un corps de forme moulé (8) à l'intérieur duquel sont noyés des câbles (10), le corps de forme moulé (8) étant simultanément réalisé sous forme d'élément d'absorption d'énergie pour assurer la protection des occupants.
